(19) Europäisches Patentamt
European Patent Office
Office européen des brevets

(11) EP 4 437 041 B1

(12) FASCICULE DE BREVET EUROPEEN

(45) Date de publication et mention de la délivrance du brevet:
**08.10.2025 Bulletin 2025/41**

(21) Numéro de dépôt: **22817912.3**

(22) Date de dépôt: **14.11.2022**

(51) Classification Internationale des Brevets (IPC):
***C08L 47/00*** (2006.01) ***B60C 1/00*** (2006.01)
***C08F 210/02*** (2006.01)

(52) Classification Coopérative des Brevets (CPC):
(C-Sets disponibles)
**B60C 1/0016; B60C 1/00; C08F 210/02; C08L 47/00** (Cont.)

(86) Numéro de dépôt international:
**PCT/EP2022/081708**

(87) Numéro de publication internationale:
**WO 2023/088817 (25.05.2023 Gazette 2023/21)**

# (54) COMPOSITION DE CAOUTCHOUC

KAUTSCHUKZUSAMMENSETZUNG

RUBBER COMPOSITION

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorité: **22.11.2021 FR 2112327**

(43) Date de publication de la demande:
**02.10.2024 Bulletin 2024/40**

(73) Titulaire: **COMPAGNIE GENERALE DES ETABLISSEMENTS MICHELIN**
**63000 Clermont-Ferrand (FR)**

(72) Inventeurs:
- **PIBRE, Guillaume**
  **63040 CLERMONT-FERRAND CEDEX 09 (FR)**
- **DUMONTET, Ludivine**
  **63040 CLERMONT-FERRAND CEDEX 09 (FR)**
- **FERRAND, Thomas**
  **63040 CLERMONT-FERRAND CEDEX 09 (FR)**
- **MAMMERI, Kahina**
  **63040 CLERMONT-FERRAND CEDEX 09 (FR)**

(74) Mandataire: **M.F.P. Michelin**
**DCJ/PI - F35 - Ladoux**
**23 place des Carmes-Déchaux**
**63040 Clermont-Ferrand Cedex 9 (FR)**

(56) Documents cités:
**EP-A1- 2 746 332**
**WO-A1-2020/094993**
**JP-A- 2010 189 613**
**JP-A- 2013 234 252**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

(52) Classification Coopérative des Brevets (CPC): (Cont.)

C-Sets
**C08F 210/02, C08F 4/52;**
**C08L 47/00, C08L 83/08, C08L 91/06, C08K 3/36, C08K 5/31, C08K 5/18, C08K 5/09, C08K 3/22, C08K 3/06, C08K 5/47, C08K 5/40;**
C08F 210/02, C08F 236/06, C08F 232/04, C08F 2500/27, C08F 2500/32

## Description

Le domaine de la présente invention est celui des compositions de caoutchouc qui comprennent une silice et un élastomère diénique fortement saturé et qui sont notamment destinées à être utilisées dans la fabrication de pneumatique.

Des compositions de caoutchouc renforcées d'une silice et comprenant un élastomère diénique fortement saturé sont connues des documents WO 2014114607 A1 et WO 2018224776 A1. L'élastomère diénique fortement saturé est un copolymère d'éthylène et d'un 1,3-diène comme le 1,3-butadiène et a la particularité de contenir plus de 50% en mole d'unité éthylène. En raison de sa teneur élevée en éthylène et de son faible taux d'unité diénique inférieur à 50% en mole, il se distingue largement des élastomères diéniques qui sont traditionnellement utilisés dans les compositions de caoutchouc et qui contiennent généralement plus de 50% en mole d'unité diénique, comme les polybutadiènes, les polyisoprènes et les copolymères de 1,3-butadiène ou d'isoprène et de styrène. Il a notamment la particularité de conférer à une composition de caoutchouc un compromis différent de propriété entre la rigidité et l'hystérèse.

Il existe toujours un besoin d'améliorer encore les propriétés à la rupture à l'état cuit de telles compositions de caoutchouc.

Les inventeurs ont découvert une nouvelle composition de caoutchouc qui possède des propriétés à la rupture à l'état cuit davantage améliorées telles que l'allongement à la rupture et la contrainte à la rupture.

Ainsi, l'invention concerne une composition de caoutchouc qui comprend :

- un élastomère diénique fortement saturé qui est un copolymère d'éthylène et d'un 1,3-diène qui comprend des unités éthylène qui représentent plus de 50% en moles des unités monomères du copolymère,
- un système de vulcanisation,
- une charge renforçante qui contient une silice,
- et un agent de couplage silane organofonctionnel ayant au moins une fonction thiol bloquée, au moins une fonction thiol et au moins une fonction qui est un groupe hydroxyalcoxysilyle ou un groupe dialcoxysilyle cyclique et répondant à la formule (1)

$$(A)_p(B)_q \qquad (1)$$

dans laquelle A et B représentent respectivement un motif mercaptosilane bloqué répondant à la formule (2) et un motif mercaptosilane répondant à la formule (3)

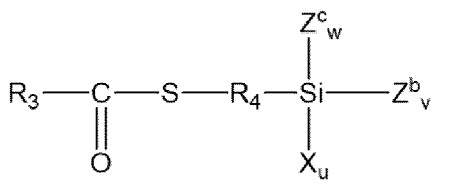

(2)

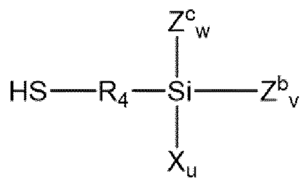

(3)

dans lesquelles

$R_3$ est choisi parmi un atome d'hydrogène, un alkyle en $C_1$-$C_{18}$, linéaire ou ramifié, un alcényle en $C_2$-$C_{18}$, linéaire ou ramifié,

chaque $R_4$ est indépendamment choisi parmi les groupes divalents hydrocarbonés saturés en $C_1$-$C_6$, linéaires ou ramifiés,

chaque $Z^b$ qui forme une structure de pontage entre un atome de silicium d'un motif et un atome de silicium d'un autre motif, ces motifs pouvant être identiques ou différents, est choisi indépendamment parmi $(\text{-O-})_{0,5}$ et $[\text{-O}(R^0CR^0)_f\text{O-}]_{0,5}$ avec les symboles $R^0$, identiques ou différents, représentant chacun un atome d'hydrogène ou un alkyle en $C_1$-$C_3$ et f étant un nombre compris dans un domaine allant de 2 à 15,

chaque $Z^c$ qui forme une structure cyclique avec l'atome de silicium d'un motif est un groupe de formule $[\text{-O}(R^0CR^0)_f\text{O-}]_{0,5}$ avec $R^0$ et f tels que définis précédemment,

chaque X est choisi indépendamment parmi un atome d'hydrogène, un groupe hydroxyle, un groupe alkyle en

$C_1$-$C_6$, un groupe alcoxyle en $C_1$-$C_6$ et un groupe de formule $HO(R^0CR^0)_fO$-avec $R^0$ et f tels que définis précédemment,
avec u+v+2w=3, u étant un nombre égal à 0, 1, 2 ou 3, v étant un nombre égal à 1, 2 ou 3 et w étant un nombre égal à 0 ou 1,
p est un nombre compris dans un domaine allant de 1 à 20,
q est un nombre compris dans un domaine allant de 1 à 20.

L'invention concerne également un pneumatique qui comprend une composition de caoutchouc conforme à l'invention, préférentiellement dans sa bande de roulement.

## Description

Tout intervalle de valeurs désigné par l'expression "entre a et b" représente le domaine de valeurs supérieur à "a" et inférieur à "b" (c'est-à-dire bornes a et b exclues) tandis que tout intervalle de valeurs désigné par l'expression "de a à b" signifie le domaine de valeurs allant de "a" jusqu'à "b" (c'est-à-dire incluant les bornes strictes a et b).

L'abréviation "pce" signifie parties en poids pour cent parties d'élastomère (du total des élastomères si plusieurs élastomères sont présents).

Les composés mentionnés dans la description peuvent être d'origine fossile ou biosourcés. Dans ce dernier cas, ils peuvent être, partiellement ou totalement, issus de la biomasse ou obtenus à partir de matières premières renouvelables issues de la biomasse. De la même manière, les composés mentionnés peuvent également provenir du recyclage de matériaux déjà utilisés, c'est-à-dire qu'ils peuvent être, partiellement ou totalement, issus d'un procédé de recyclage, ou encore obtenus à partir de matières premières elles-mêmes issues d'un procédé de recyclage.

Dans la présente invention, on entend par pneumatique (en anglais « tyre ») un bandage pneumatique ou non pneumatique. Un bandage pneumatique comporte usuellement deux bourrelets destinés à entrer en contact avec une jante, un sommet composé d'au moins une armature de sommet et une bande de roulement, deux flancs, le pneumatique étant renforcé par une armature de carcasse ancrée dans les deux bourrelets. Un bandage non-pneumatique, quant à lui, comporte usuellement une base, conçue par exemple pour le montage sur une jante rigide, une armature de sommet, assurant la liaison avec une bande de roulement et une structure déformable, tels que des rayons, nervures ou alvéoles, cette structure étant disposée entre la base et le sommet. De tels bandages non-pneumatiques ne comprennent pas nécessairement de flanc. Des bandages non-pneumatiques sont décrits par exemples dans les documents WO 03/018332 et FR2898077. Selon l'un quelconque des modes de réalisation de l'invention, le pneumatique selon l'invention est préférentiellement un bandage pneumatique.

Sauf indication contraire, les taux des unités résultant de l'insertion d'un monomère dans un copolymère tel que le copolymère utile à l'invention sont exprimés en pourcentage molaire par rapport à la totalité des unités monomères du copolymère.

L'élastomère utile aux besoins de l'invention est un élastomère diénique fortement saturé, de préférence statistique, qui comprend des unités éthylène résultant de la polymérisation d'éthylène. De manière connue, l'expression « unité éthylène » fait référence au motif $-(CH_2-CH_2)-$ résultant de l'insertion de l'éthylène dans la chaîne élastomère. L'élastomère diénique fortement saturé est riche en unité éthylène, puisque les unités éthylène représentent plus de 50% en mole de l'ensemble des unités monomères de l'élastomère.

De préférence, l'élastomère diénique fortement saturé comprend au moins 60% molaire d'unité éthylène, préférentiellement au moins 65% molaire d'unité éthylène, plus préférentiellement au moins 70% molaire d'unités éthylène. Autrement dit, les unités éthylène dans l'élastomère diénique fortement saturé représentent préférentiellement au moins 60% en mole de l'ensemble des unités monomères de l'élastomère diénique fortement saturé, plus préférentiellement au moins 65% en mole de l'ensemble des unités monomères de l'élastomère diénique fortement saturé. De manière encore plus préférentielle, les unités éthylène représentent au moins 70% en mole de l'ensemble des unités monomères de l'élastomère diénique fortement saturé.

De préférence, les unités éthylène dans l'élastomère diénique fortement saturé représentent au plus 90% en mole de l'ensemble des unités monomères de l'élastomère diénique fortement saturé. De manière plus préférentielle, les unités éthylène représentent au plus 85% en mole de l'ensemble des unités monomères de l'élastomère diénique fortement saturé. De manière encore plus préférentielle, les unités éthylène représentent au plus 80% en mole de l'ensemble des unités monomères de l'élastomère diénique fortement saturé.

Selon un mode de réalisation avantageux, l'élastomère diénique fortement saturé comprend de 60% à 90% molaire d'unité éthylène, particulièrement de 60% à 85% molaire d'unité éthylène, pourcentage molaire calculé sur la base de l'ensemble des unités monomères de l'élastomère diénique fortement saturé. Plus avantageusement, l'élastomère diénique fortement saturé comprend de 60% à 80% molaire d'unité éthylène, pourcentage molaire calculé sur la base de l'ensemble des unités monomères de l'élastomère diénique fortement saturé.

Selon un autre mode de réalisation avantageux, l'élastomère diénique fortement saturé comprend de 65% à 90%

molaire d'unité éthylène, particulièrement de 65% à 85% molaire d'unité éthylène, pourcentage molaire calculé sur la base de l'ensemble des unités monomères de l'élastomère diénique fortement saturé. Plus avantageusement, l'élastomère diénique fortement saturé comprend de 65% à 80% molaire d'unité éthylène, pourcentage molaire calculé sur la base de l'ensemble des unités monomères de l'élastomère diénique fortement saturé.

Selon encore un autre mode de réalisation avantageux de l'invention, l'élastomère diénique fortement saturé comprend de 70% à 90% molaire d'unité éthylène, particulièrement de 70% à 85% molaire d'unité éthylène, pourcentage molaire calculé sur la base de l'ensemble des unités monomères de l'élastomère diénique fortement saturé. Plus avantageusement, l'élastomère diénique fortement saturé comprend de 70% à 80% molaire d'unité éthylène, pourcentage molaire calculé sur la base de l'ensemble des unités monomères de l'élastomère diénique fortement saturé.

L'élastomère diénique fortement saturé étant un copolymère d'éthylène et d'un 1,3-diène comprend aussi des unités 1,3-diène résultant de la polymérisation d'un 1,3-diène. De manière connue, l'expression « unité 1,3-diène » fait référence aux unités résultant de l'insertion du 1,3-diène par une addition 1,4, une addition 1,2 ou une addition 3,4 dans le cas de l'isoprène par exemple. Les unités 1,3-diène sont celles par exemple d'un 1,3-diène ayant 4 à 12 atomes de carbone, tels que le 1,3-butadiène, l'isoprène, le 1,3-pentadiène, un aryl-1,3-butadiène. De préférence, le 1,3-diène est le 1,3-butadiène ou un mélange de 1,3-diènes dont un est le 1,3-butadiène. De manière plus préférentielle, le 1,3-diène est le 1,3-butadiène auquel cas l'élastomère diénique fortement saturé est un copolymère d'éthylène et de 1,3-butadiène, de préférence statistique.

L'élastomère diénique fortement saturé peut être obtenu selon différentes méthodes de synthèses connues de l'homme du métier, notamment en fonction de la microstructure visée de l'élastomère diénique fortement saturé. Généralement, il peut être préparé par copolymérisation au moins d'un 1,3-diène, de préférence le 1,3-butadiène, et d'éthylène et selon des méthodes de synthèse connues, en particulier en présence d'un système catalytique comprenant un complexe métallocène. On peut citer à ce titre les systèmes catalytiques à base de complexes métallocènes, lesquels systèmes catalytiques sont décrits dans les documents EP 1 092 731, WO 2004035639, WO 2007054223 et WO 2007054224 au nom de la Demanderesse. L'élastomère diénique fortement saturé, y compris lorsqu'il est statistique, peut être préparé aussi par un procédé utilisant un système catalytique de type préformé comme ceux décrits dans les documents WO 2017093654 A1, WO 2018020122 A1 et WO 2018020123 A1. Avantageusement, l'élastomère diénique est statistique et est préparé préférentiellement selon un procédé semi continu ou continu tel que décrit dans les documents WO 2017103543 A1, WO 201713544 A1, WO 2018193193 et WO 2018193194. L'élastomère diénique fortement saturé peut porter des groupes fonctionnels comportant un ou plusieurs hétéroatomes tels que azote, oxygène, silicium, halogène. Les groupes fonctionnels peuvent être introduits dans l'élastomère diénique fortement saturé au cours de sa synthèse ou après sa synthèse, comme cela est par exemple décrit dans le document WO 2017097831 A1. Selon l'un quelconque des modes de réalisation de l'invention, l'élastomère diénique fortement saturé est préférentiellement un polymère hydrocarboné, c'est-à-dire constitué uniquement d'atomes d'hydrogène et d'atomes de carbone.

L'élastomère diénique fortement saturé contient de préférence des unités de formule (I) ou des unités de formule (II).

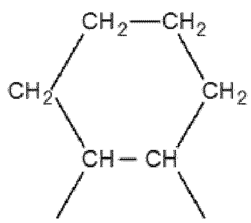

(I)

$$-CH_2-CH(CH=CH_2)- \quad (II)$$

La présence de motif cyclique saturé à 6 membres, 1,2-cyclohexanediyle, de formule (I) dans le copolymère peut résulter d'une série d'insertions très particulières de l'éthylène et du 1,3-butadiène dans la chaîne polymère au cours de sa croissance. Lorsque l'élastomère diénique fortement saturé comprend des unités de formule (I) ou des unités de formule (II), les pourcentages molaires des unités de formule (I) et des unités de formule (II) dans l'élastomère diénique fortement saturé, respectivement o et p, satisfont de préférence à l'équation suivante (eq. 1) ou à l'équation (eq. 2), o et p étant calculés sur la base de l'ensemble des unités monomères de l'élastomère diénique fortement saturé.

$$0 < o+p \leq 30 \quad \text{(eq. 1)}$$

$$0 < o+p < 25 \quad \text{(eq. 2)}$$

De préférence, l'élastomère diénique fortement saturé comprend des unités de formule (I) selon un taux molaire supérieur à 0% et inférieur à 15%, plus préférentiellement inférieur à 10% molaire, pourcentage molaire calculé sur la base de l'ensemble des unités monomères de l'élastomère diénique fortement saturé.

La composition de caoutchouc peut contenir en plus de l'élastomère diénique fortement saturé un deuxième élastomère diénique. On entend par élastomère diénique un élastomère constitué au moins en partie (i.e., un homopolymère ou un copolymère) d'unités monomères diènes (monomères porteurs de deux doubles liaisons carbone-carbone, conjuguées ou non). Les unités monomères diènes sont appelées unités diéniques. Le deuxième élastomère peut être choisi dans le groupe des élastomères diéniques fortement insaturés constitué par les polybutadiènes, les polyisoprènes, les copolymères de butadiène, les copolymères d'isoprène et leur mélange. On appelle un élastomère fortement insaturé un élastomère qui contient plus de 50% en mole d'unité diénique.

De préférence, le taux de l'élastomère diénique fortement saturé dans la composition de caoutchouc est d'au moins 50 parties en poids pour cent parties d'élastomère de la composition de caoutchouc (pce). De manière plus préférentielle, le taux de l'élastomère diénique fortement saturé dans la composition de caoutchouc varie dans un domaine allant de 80 à 100 pce. De manière encore plus préférentielle, il varie dans un domaine allant de 90 à 100 pce. Il est avantageusement de 100 pce. L'élastomère diénique fortement saturé peut être un seul élastomère diénique fortement saturé ou bien un mélange de plusieurs élastomères diéniques fortement saturés qui se différencient les uns des autres par leurs microstructures ou par leurs macrostructures. Dans le cas où la composition de caoutchouc contient plusieurs élastomères diéniques fortement saturés qui se différencient les uns des autres par leurs microstructures ou par leurs macrostructures, le taux de l'élastomère diénique fortement saturé dans la composition de caoutchouc se rapporte au mélange d'élastomères diéniques fortement saturés.

La silice utilisée peut être toute silice renforçante connue de l'homme du métier, notamment toute silice précipitée ou pyrogénée présentant une surface spécifique BET ainsi qu'une surface spécifique CTAB toutes deux inférieures à 450 $m^2/g$, de préférence comprises dans un domaine allant de 30 à 400 $m^2/g$, notamment de 60 à 300 $m^2/g$. Dans le présent exposé, la surface spécifique BET est déterminée par adsorption de gaz à l'aide de la méthode de Brunauer-Emmett-Teller décrite dans « The Journal of the American Chemical Society » (Vol. 60, page 309, février 1938), et plus précisément selon une méthode adaptée de la norme NF ISO 5794-1, annexe E de juin 2010 [méthode volumétrique multipoints (5 points) - gaz: azote - dégazage sous vide: une heure à 160°C - domaine de pression relative p/po : 0.05 à 0.17]. Les valeurs de surface spécifique CTAB ont été déterminées selon la norme NF ISO 5794-1, annexe G de juin 2010. Le procédé est basé sur l'adsorption du CTAB (bromure de N-hexadécyl-N,N,N-triméthylammonium) sur la surface « externe » de la charge renforçante.

On peut utiliser tout type de silice précipitée, notamment des silices précipitées hautement dispersibles (dites « HDS » pour « highly dispersible » ou « highly dispersible silica »). Ces silices précipitées, hautement dispersibles ou non, sont bien connues de l'homme du métier. On peut citer, par exemple, les silices décrites dans les demandes WO03/016215-A1 et WO03/016387-A1. Parmi les silices HDS commerciales, on peut notamment utiliser les silices « Ultrasil ® 5000GR », « Ultrasil ® 7000GR » de la société Evonik, les silices « Zeosil ® 1085GR », « Zeosil® 1115 MP », « Zeosil® 1165MP », « Zeosil® Premium 200MP », « Zeosil® HRS 1200 MP » de la Société Solvay. À titre de silice non HDS, les silices commerciales suivantes peuvent être utilisées : les silices « Ultrasil ® VN2GR », « Ultrasil ® VN3GR » de la société Evonik, la silice « Zeosil® 175GR » » de la société Solvay, les silices « Hi-Sil EZ120G(-D) », « Hi-Sil EZ160G(-D) », « Hi-Sil EZ200G(-D) », « Hi-Sil 243LD », « Hi-Sil 210 », « Hi-Sil HDP 320G » de la société PPG.

La charge renforçante peut comprendre tout type de charge dite renforçante autre que la silice, connue pour ses capacités à renforcer une composition de caoutchouc utilisable notamment pour la fabrication de pneumatiques, par exemple un noir de carbone. Comme noirs de carbone conviennent tous les noirs de carbone, notamment les noirs conventionnellement utilisés dans les pneumatiques ou leurs bandes de roulement. Parmi ces derniers, on citera plus particulièrement les noirs de carbone renforçants des séries 100, 200, 300, ou les noirs de série 500, 600 ou 700 (grades ASTM D-1765-2017), comme par exemple les noirs N115, N134, N234, N326, N330, N339, N347, N375, N550, N683, N772. Ces noirs de carbone peuvent être utilisés à l'état isolé, tels que disponibles commercialement, ou sous tout autre forme, par exemple comme support de certains des additifs de caoutchouterie utilisés. Lorsque le noir de carbone est utilisé dans la composition de caoutchouc, il l'est de préférence à un taux inférieur ou égal à 10 pce (par exemple le taux de noir de carbone peut être compris dans un domaine allant de 1 à 10 pce). Avantageusement, le taux de noir de carbone dans la composition de caoutchouc est inférieur ou égal à 5 pce. Dans les intervalles indiqués, on bénéficie des propriétés colorantes (agent de pigmentation noir) et anti-UV des noirs de carbone, sans pénaliser par ailleurs les performances typiques apportées par la silice.

La silice représente préférentiellement plus de 50% en masse de la charge renforçante. En d'autres termes, la proportion de silice dans la charge renforçante est supérieure à 50% en poids du poids total de la charge renforçante. De manière plus préférentielle, la silice représente plus de 85% en masse de la charge renforçante.

Le taux total de charge renforçante peut varier dans un large domaine, par exemple de 30 pce à 150 pce. Selon un premier mode de réalisation, le taux total de charge renforçante varie dans un domaine allant de 30 pce à 60 pce. Selon un deuxième mode de réalisation, le taux total de charge renforçante varie dans un domaine allant de plus de 60 pce à 150

pce.

Le premier mode de réalisation est préféré au deuxième mode de réalisation pour un usage de la composition de caoutchouc dans une bande de roulement ayant une très faible résistance au roulement. L'une quelconque de ces plages de taux total de charge renforçante peut s'appliquer à l'un quelconque des modes de réalisation de l'invention.

Pour coupler la silice à l'élastomère diénique à l'élastomère diénique fortement saturé, on utilise un agent de couplage (ou agent de liaison), un silane, au moins bifonctionnel destiné à assurer une connexion suffisante, de nature chimique et/ou physique, entre la silice et l'élastomère diénique. La composition de caoutchouc conforme à l'invention comprend à titre d'agent de couplage un silane organofonctionnel ayant au moins un motif mercaptosilane bloqué, au moins un motif mercaptosilane et au moins une fonction qui est un groupe hydroxyalcoxysilyle ou un groupe dialcoxysilyle cyclique. Le silane organofonctionnel répond à la formule (1) suivante :

$$(A)_p(B)_q \qquad (1)$$

dans laquelle

- A est un symbole représentant un motif mercaptosilane bloqué répondant à la formule (2)

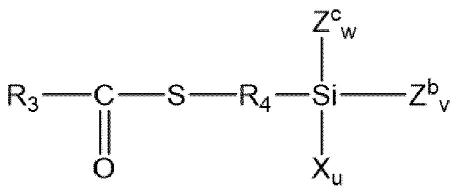

(2)

- B est un symbole représentant un motif mercaptosilane répondant à la formule (3)

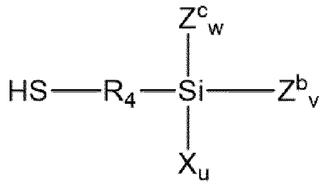

(3)

Dans la formule (2), $R_3$ est choisi parmi un atome d'hydrogène, un alkyle en $C_1$-$C_{18}$, linéaire ou ramifié, un alcényle en $C_2$-$C_{18}$, linéaire ou ramifié,

Dans les formules (2) et (3), chaque $R_4$ est indépendamment choisi parmi les groupes divalents hydrocarbonés saturés en $C_1$-$C_6$, linéaires ou ramifiés, chaque $Z^b$ qui forme une structure de pontage entre un atome de silicium d'un motif et un atome de silicium d'un autre motif, ces motifs pouvant être identiques ou différents, est choisi indépendamment parmi $(\text{-O-})_{0,5}$ et $[\text{-O}(R^0CR^0)_f\text{O-}]_{0,5}$ avec les symboles $R^0$, identiques ou différents, représentant chacun un atome d'hydrogène ou un alkyle en $C_1$-$C_3$ et f étant un nombre compris dans un domaine allant de 2 à 15, chaque $Z^c$ qui forme une structure cyclique avec l'atome de silicium d'un motif est un groupe de formule $[\text{-O}(R^0CR^0)_f\text{O-}]_{0,5}$ avec $R^0$ et f tels que définis précédemment, chaque X est choisi indépendamment parmi un atome d'hydrogène, un groupe hydroxyle, un groupe alkyle en $C_1$-$C_6$, un groupe alcoxyle en $C_1$-$C_6$ et un groupe de formule $HO(R^0CR^0)_fO$- avec $R^0$ et f tels que définis précédemment, avec u+v+2w=3, u étant un nombre égal à 0, 1, 2 ou 3, v étant un nombre égal à 1, 2 ou 3 et w étant un nombre égal à 0 ou 1.

p est un nombre compris dans un domaine allant de 1 à 20, q est un nombre compris dans un domaine allant de 1 à 20.

Par « silane organofonctionnel », on entend au sens de la présente invention un silane ou un mélange de silanes ayant pour caractéristique de posséder au moins une fonction thiol bloquée, c'est-à-dire protégée, une fonction thiol, c'est-à-dire non protégée, et au moins une fonction qui est un groupe hydroxylalcoxysilyle ou un groupe dialcoxysilyle cyclique.

Par « motif mercaptosilane », on entend un motif qui contient au moins un atome de silicium et une fonction thiol (-SH) liée à un atome de carbone.

Par « motif mercaptosilane bloqué », on entend un motif qui contient au moins un atome de silicium et au moins une fonction thiol bloquée. Une fonction thiol bloquée peut par exemple être un groupe thioester -S-(CO)-R.

Dans le composé de formule (1), l'enchaînement des motifs de répétition mercaptosilane bloqué (A) et des motifs de répétition mercaptosilane (B) est indifférent. En particulier cet enchaînement peut être alterné (par exemple A-B-A-B-A-B), par bloc (par exemple A-A-A-B-B-B) ou statistique, c'est-à-dire que la distribution séquentielle desdits motifs (A) et (B) obéit à des lois statistiques connues.

Par groupe hydroxyalcoxy utilisée dans la dénomination hydroxyalcoxysilyle, on entend un groupe monovalent

de formule $HO(R^0CR^0)_fO$- qui substitue l'atome de silicium, $R^0$ et f étant tels que définis précédemment.

Par groupe dialcoxysilyle cyclique, on entend un groupe dans lequel un atome de silicium est lié à deux atomes d'oxygène liés chacun à un atome de carbone distinct d'un même groupe alkylène.

Par « structure de pontage », on entend une structure chimique faite de liaison(s) covalente(s) permettant de lier entre eux deux motifs de répétition, ces motifs de répétition pouvant être identiques ou différents.

La dénomination en $C_n$-$C_m$ qualifiant un groupe fait référence au nombre d'atomes de carbone constitutifs du groupe qui contient n à m atomes de carbone, n et m étant des nombres entiers avec m supérieur à n.

De préférence, $R_3$ dans la formule (2) est choisi parmi l'atome d'hydrogène, les alkyles en $C_1$-$C_{10}$ et les alcényles en $C_2$-$C_{10}$. De manière plus préférentielle, $R_3$ dans la formule (2) est un alkyle en $C_6$-$C_8$ linéaire. De manière encore plus préférentielle, le symbole $R_3$ dans la formule (2) est heptyle ($C_7H_{15}$-).

De préférence, chaque $R_4$ dans les formules (2) et (3) est indépendamment un alkylène en $C_1$-$C_4$ linéaire. Plus préférentiellement, chaque $R_4$ est propylène.

De préférence, chaque $Z^b$ dans les formules (2) et (3) est choisi indépendamment dans le groupe constitué par les motifs de formule $(-O-)_{0,5}$, $[-OCH_2CH_2CH_2O-]_{0,5}$, $[-OCH_2CH_2CH_2CH_2O-]_{0,5}$ et $[-OCH_2CH(CH_3)CH_2O-]_{0,5}$. Plus préférentiellement, $Z^b$ dans les formules (2) et (3) est de formule $(-O-)_{0,5}$ ou de formule $[-OCH_2CH(CH_3)CH_2O-]_{0,5}$.

De préférence, chaque $Z^c$ dans les formules (2) et (3) est choisi indépendamment dans le groupe constitué par les motifs de formule $[-OCH_2CH_2CH_2O-]_{0,5}$, $[-OCH_2CH_2CH_2CH_2O-]_{0,5}$ et $[-OCH_2CH(CH_3)CH_2O-]_{0,5}$. Plus préférentiellement, chaque $Z^c$ dans les formules (2) et (3) est de formule $[-OCH_2CH(CH_3)CH_2O-]_{0,5}$.

De préférence, chaque X dans les formules (2) et (3) est choisi indépendamment dans le groupe constitué par hydroxyle, méthoxy, éthoxy, méthyle, éthyle, 3-hydroxypropoxy, 3-hydroxy-2-méthylpropoxy et 4-hydroxybut-1-oxy. Plus préférentiellement, chaque X dans les formules (2) et (3) est identique et est choisi dans le groupe constitué par hydroxyle, méthoxy, éthoxy et 3-hydroxy-2-méthylpropoxy.

Très avantageusement, dans les formules (2) et (3), $R_3$ est heptyle ($C_7H_{15}$-), chaque $R_4$ est propylène, chaque $Z^b$ est de formule $(-O-)_{0,5}$ ou $[-OCH_2CH(CH_3)CH_2O-]_{0,5}$, chaque $Z^c$ est de formule $[-OCH_2CH(CH_3)CH_2O-]_{0,5}$, chaque X est choisi dans le groupe constitué par hydroxyle, méthoxy, éthoxy et 3-hydroxy-2-methylpropoxy, avec u+v+2w=3, u étant 0, 1, 2 ou 3, v étant 1, 2 ou 3 et w étant 0 ou 1.

Les notations $(-O-)_{0,5}$ et $[-O(R^0CR^0)_fO-]_{0,5}$ se rapportent à la moitié d'une liaison de siloxane et à la moitié d'un groupe dialcoxy de pontage respectivement. Ces notations sont utilisées conjointement avec un atome de silicium des motifs de répétition de l'oligomère. Elles désignent la moitié d'un atome d'oxygène, à savoir la moitié de l'atome d'oxygène qui est lié à l'atome de silicium d'un motif de répétition ou la moitié d'un groupe dialcoxy, à savoir la moitié de l'atome du groupe dialcoxy qui est lié à l'atome de silicium d'un motif de répétition; étant entendu que l'autre moitié de l'atome d'oxygène ou du groupe dialcoxy respectivement se trouve lié à un autre atome de silicium d'un autre motif de répétition de la structure de l'oligomère ; les motifs de répétition pouvant être identiques ou différents. Ainsi, $(-O-)_{0,5}$ forme une liaison siloxane entre deux atomes de silicium appartenant chacun à un motif de répétition. $[-O(R^0CR^0)_fO-]_{0,5}$ peut former soit une structure de pontage (cette structure intermoléculaire étant représenté par $Z^b$) entre deux atomes de silicium appartenant chacun à un motif de répétition, soit une structure cyclique (cette structure intramoléculaire étant représentée par $Z^c$), les deux atomes d'oxygène de $[-O(R^0CR^0)_fO-]_{0,5}$ étant liés à l'atome de silicium du motif. L'homme du métier comprendra que dans le composé de formule (1), les structures de pontages peuvent être identiques ou différentes entre les motifs de répétition. Par exemple, les structures de pontage peuvent être de type - $Si-O(R^0CR^0)_fO-Si$- ou bien un mélange de structure de pontage de type $-Si-O(R^0CR^0)_fO-Si$- et de type -Si-O-Si-.

Préférentiellement, le silane organofonctionnel présente un pourcentage molaire des motifs mercaptosilanes bloqués (A) allant de 20 à 80 % et un pourcentage molaire des motifs mercaptosilanes (B) allant de 80 à 20%. Plus préférentiellement le silane organofonctionnel présente un pourcentage molaire des motifs mercaptosilanes bloqués (A) allant de de 40 à 60 % et un pourcentage molaire des motifs mercaptosilanes (B) allant de 60 à 40%. Encore plus préférentiellement, le silane organofonctionnel présente un pourcentage molaire des motifs mercaptosilanes bloqués allant de 50 à 55 % et un pourcentage molaire des motifs mercaptosilanes allant de 50 à 45%. Le pourcentage molaire des motifs mercaptosilanes bloqués et celui des motifs mercaptosilanes du silane organofonctionnel sont calculés par rapport au nombre total de motifs thiols, qu'ils soient bloqués ou non, dans le silane organofonctionnel et ils peuvent être déterminés par toute méthode bien connue de l'homme du métier, telle que par exemple l'analyse $^1H$ RMN.

L'agent de couplage, le silane organofonctionnel, peut être obtenu à partir d'un procédé de synthèse comprenant au moins une étape (a) de réaction de trans-estérification d'un composé diol de formule (4) avec au moins un composé mercaptosilane bloqué de formule (5) et avec au moins un composé mercaptosilane de formule (6) :

$HO(R^0CR^0)_fOH$ (4)

$(RO)_3SiR_4SC(=O)R_3$ (5)

$(RO)_3SiR_4SH$ (6)

$R^0$ et f étant tels que définis précédemment, à savoir $R^0$, identique ou différent, représentant un atome d'hydrogène, un méthyle, un éthyle ou un propyle et f un nombre compris dans un domaine allant de 2 à 15,
R, identique ou différent, représentant un groupe alkyle en $C_1$-$C_6$ linéaire,
$R_3$ et $R_4$ étant tels que définis précédemment, à savoir $R_4$ représentant un groupe divalent hydrocarboné saturé en $C_1$-$C_6$, linéaire ou ramifié, $R_3$ représentant un atome d'hydrogène, un alkyle en $C_1$-$C_{18}$, linéaire ou ramifié, ou un alcényle en $C_2$-$C_{18}$, linéaire ou ramifié.

La réaction de trans-estérification est une réaction bien connue de l'homme du métier et peut être réalisée en présence d'un catalyseur de trans-estérification, comme par exemple, des acides forts.
Préférentiellement, dans le procédé décrit ci-dessus, le composé diol de formule (4) est choisi parmi $HOCH_2CH_2CH_2OH$, $HOCH_2CH_2CH_2CH_2OH$ et $HOCH_2CH(CH_3)CH_2OH$. Plus préférentiellement, dans le procédé décrit ci-dessus, le composé diol de formule (4) est $HOCH_2CH(CH_3)CH_2OH$.
Préférentiellement, les composés de formule (5) et (6) utilisés dans la mise en œuvre du procédé décrit ci-dessus sont ceux dans lesquels le groupe R est choisi parmi méthyle, éthyle, propyle, iso-propyle, n-butyle, iso-butyle
Préférentiellement, les composés de formule (5) utilisés dans la mise en œuvre du procédé décrit ci-dessus sont ceux dans lesquels $R_3$ représente un atome d'hydrogène, un alkyle en $C_1$-$C_{10}$, linéaire ou ramifié, ou un alcényle en C2-C10, linéaire ou ramifié. Plus préférentiellement, les composés de formule (5) utilisés dans la mise en œuvre du procédé décrit ci-dessus sont ceux dans lesquels $R_3$ est un alkyle en $C_6$-$C_8$ linéaire. Plus préférentiellement encore, les composés de formule (5) utilisés dans la mise en œuvre du procédé décrit ci-dessus sont ceux dans lesquels $R_3$ est heptyle ($C_7H_{15}$-).
De préférence, les composés de formule (5) et (6) utilisés dans la mise en œuvre du procédé décrit ci-dessus sont ceux dans lesquels chaque $R_4$ est indépendamment un groupe hydrocarboné divalent choisi dans le groupe constitué par les alkylènes en $C_1$-$C_4$ linéaire. Plus préférentiellement, les composés de formule (5) et (6) utilisés dans la mise en œuvre du procédé décrit ci-dessus sont ceux dans lesquels chaque $R_4$ est propylène.
Préférentiellement, les composés de formule (5) et (6) utilisés dans la mise en œuvre du procédé décrit ci-dessus sont ceux dans lesquels $R_3$ est heptyle, $R_4$ est propylène, R , identique ou différent (de préférence identique), est choisi parmi méthyle, éthyle, propyle, isopropyle, n-butyle, iso-butyle et le composé de formule (4) utilisé dans la mise en œuvre du procédé décrit ci-dessus est $HOCH_2CH(CH_3)CH_2OH$.
Des mélanges de composés de formule (5) et des mélanges de composés de formule (6) peuvent être utilisés pour synthétiser l'agent de couplage, le silane organofonctionnel.
Le procédé de synthèse de l'agent de couplage peut comprendre, en outre :

- au moins une étape de traitement (b) des produits obtenus à l'étape (a) pour convertir une partie des fonctions thiols bloquées, si présentes dans les produits obtenus à l'étape (a), en des fonctions thiols (-SH) et/ou
- au moins une étape de traitement (c) des produits obtenus à l'étape (a) pour convertir une partie des fonctions thiols, si présents dans les produits obtenus à l'étape (a), en des fonctions thiols bloquées et/ou
- au moins une étape (d) d'hydrolyse partielle des produits obtenus à l'étape (a), des produits obtenus à l'étape (b) si cette étape est mise en œuvre dans le procédé et des produits obtenus à l'étape (c) si cette étape est mise en œuvre dans le procédé.

L'étape de traitement (b) peut, par exemple, être une étape au cours de laquelle on utilise une base forte, par exemple, NaOEt, pour convertir les fonctions thiols bloquées portées par les produits obtenus à l'étape (a) en des fonctions thiols. L'étape de traitement (c) peut, par exemple, être une étape d'estérification des fonctions thiols des produits obtenus à l'étape (a) à l'aide d'un acide carboxylique (notamment $C_7H_{15}COOH$) ou d'un chlorure d'acyle (notamment $C_7H_{15}COCl$) pour les convertir en fonctions thiols bloquées. L'étape (d) d'hydrolyse partielle peut avoir lieu lorsqu'il y a un excès d'eau par rapport aux produits et réactifs utilisés au cours des étapes (a), et éventuellement des étapes (b) et (c) si présentes.
L'étape d'hydrolyse partielle permet d'obtenir les composés décrits ci-dessus dans lesquels $Z^b$ représente $(-O-)_{0,5}$ ou OH.
L'homme du métier pourra se référer notamment au document WO2007/098120 A2 qui décrit le procédé d'obtention de l'agent de couplage silane organofonctionnel.
L'agent de couplage organofonctionnel peut être obtenu sous la forme d'un mélange résultant de la mise en œuvre du procédé décrit ci-dessus et peut être utilisé dans la composition de caoutchouc conforme à l'invention sous la forme de ce mélange. Le mélange contient non seulement l'agent de couplage organofonctionnel, mais aussi d'autres silanes choisis parmi l'un quelconque des composés suivants et leurs mélanges :

- un composé de formule (2') qui dérive de la formule (2), la formule (2') se différenciant de la formule (2) en ce que $Z^b{}_v$ est remplacé par $z^at$, $Z^a$ ayant la même définition que le groupe X de la formule (2), t étant un nombre égal à 0, 1, 2 ou 3

avec u+t+2w= 3 et u et w ayant la même définition que dans la formule (2),

- un composé de formule (3') qui dérive de la formule (3), la formule (3') se différenciant de la formule (3) en ce que $Z^b_v$ est remplacé par $z^a_t$, $Z^a$ ayant la même définition que le groupe X de la formule (3), t étant un nombre égal à 0, 1, 2 ou 3 avec u+t+2w= 3 et u et w ayant la même définition que dans la formule (3),
- un dimère constitué de deux motifs mercaptosilane bloqué de formule (2),
- un dimère constitué de deux motifs mercaptosilane de formule (3),
- un dimère constitué d'un motif de mercaptosilane bloqué (2) et d'un motif mercaptosilane de formule (3)
- un oligomère constitué de motifs mercaptosilane bloqué de formule (2),
- un oligomère constitué de motifs mercaptosilane de formule (3).

L'agent de couplage silane organofonctionnel est par exemple disponible commercialement auprès de Momentive. Inc sous la référence commerciale « NXT-Z », en particulier « NXT-Z45 ».

Dans la composition de caoutchouc conforme à l'invention, le taux de l'agent de couplage silane organofonctionnel est ajusté par l'homme du métier selon la surface spécifique de la silice utilisée dans la composition de caoutchouc et selon le taux de silice dans la composition de caoutchouc. Il varie préférentiellement de 1 à 15 pce, plus préférentiellement de 1.5 à 10 pce, encore plus préférentiellement de 2 à 5 pce.

La composition de caoutchouc conforme à l'invention a pour autre caractéristique essentielle de contenir un système de vulcanisation, c'est-à-dire un système de réticulation à base de soufre. Le soufre est typiquement apporté sous forme de soufre moléculaire ou d'un agent donneur de soufre, de préférence sous forme moléculaire. Le soufre sous forme moléculaire est aussi désigné sous l'appellation de soufre moléculaire. On entend par donneur de soufre tout composé qui libère des atomes de soufre, combinés ou pas sous la forme d'une chaîne polysulfure, aptes à s'insérer dans les chaînes polysulfures formés au cours de la vulcanisation et pontant les chaînes élastomères. Au système de vulcanisation viennent s'ajouter, incorporés au cours de la première phase non-productrice et/ou au cours de la phase productive, divers accélérateurs secondaires ou activateurs de vulcanisation connus tels qu'oxyde de zinc, acide stéarique, dérivés guanidiques (en particulier diphénylguanidine), etc. Le taux de soufre est de préférence compris entre 0.5 et 4 pce, celui de l'accélérateur primaire est de préférence compris entre 0.5 et 5 pce. Ces taux préférentiels peuvent s'appliquer à l'un quelconque des modes de réalisation de l'invention.

On peut utiliser comme accélérateur de vulcanisation (primaire ou secondaire) tout composé susceptible d'agir comme accélérateur de vulcanisation des élastomères diéniques en présence de soufre, notamment des accélérateurs du type thiazoles ainsi que leurs dérivés, des accélérateurs de types sulfénamides pour ce qui est des accélérateurs primaires, du type thiurames, dithiocarbamates, dithiophosphates, thiourées et xanthates pour ce qui est des accélérateurs secondaires. A titre d'exemples d'accélérateurs primaires, on peut citer notamment les composés sulfénamides tels que la N-cyclohexyl-2-benzothiazyle sulfénamide ("CBS"), la N,N-dicyclohexyl-2-benzothiazyle sulfénamide ("DCBS"), la N-ter-butyl-2-benzothiazyle sulfénamide ("TBBS"), et les mélanges de ces composés. L'accélérateur primaire est préférentiellement une sulfénamide, plus préférentiellement la N-cyclohexyl-2-benzothiazyle sulfénamide. A titre d'exemple d'accélérateurs secondaires, on peut citer notamment les disulfures de thiurame tels que le disulfure de tétraéthylthiurame, le disulfure de tétrabutylthiurame ("TBTD"), le disulfure de tétrabenzylthiurame ("TBZTD") et les mélanges de ces composés. L'accélérateur secondaire est préférentiellement un disulfure de thiurame, plus préférentiellement le disulfure de tétrabenzylthiurame.

La vulcanisation est conduite de manière connue à une température généralement comprise entre 130°C et 200°C, pendant un temps suffisant qui peut varier par exemple entre 5 et 90 min en fonction notamment de la température de cuisson, du système de vulcanisation adopté et de la cinétique de vulcanisation de la composition considérée.

La composition de caoutchouc conforme à l'invention peut comporter également tout ou partie des additifs usuels habituellement utilisés dans les compositions d'élastomères destinées à la fabrication de pneumatiques, notamment des pigments, des agents de protection tels que cires anti-ozone, anti-ozonants chimiques, anti-oxydants, des plastifiants tels que des huiles ou des résines plastifiantes.

La composition de caoutchouc, avant vulcanisation, peut être fabriquée dans des mélangeurs appropriés, en utilisant deux phases de préparation successives selon une procédure bien connue de l'homme du métier : une première phase de travail ou malaxage thermo-mécanique (parfois qualifiée de phase "non-productive") à haute température, jusqu'à une température maximale comprise entre 110°C et 190°C, de préférence entre 130°C et 180°C, suivie d'une seconde phase de travail mécanique (parfois qualifiée de phase "productive") à plus basse température, typiquement inférieure à 110°C, par exemple entre 40°C et 100°C, phase de finition au cours de laquelle est incorporé le soufre ou le donneur de soufre et l'accélérateur de vulcanisation.

A titre d'exemple, la première phase (non-productive) est conduite en une seule étape thermomécanique au cours de laquelle on introduit, dans un mélangeur approprié tel qu'un mélangeur interne usuel, tous les constituants nécessaires, les éventuels agents de mise en œuvre complémentaires et autres additifs divers, à l'exception du système de vulcanisation. La durée totale du malaxage, dans cette phase non-productive, est de préférence comprise entre 1 et 15 min. Après refroidissement du mélange ainsi obtenu au cours de la première phase non-productive, on incorpore alors le

système de vulcanisation à basse température, généralement dans un mélangeur externe tel qu'un mélangeur à cylindres, le tout est alors mélangé (phase productive) pendant quelques minutes, par exemple entre 2 et 15 min.

La composition de caoutchouc peut être calandrée ou extrudée sous la forme d'une feuille ou d'une plaque, notamment pour une caractérisation au laboratoire, ou encore sous la forme d'un semi-fini (ou profilé) de caoutchouc utilisable dans un pneumatique. La composition peut être soit à l'état cru (avant réticulation ou vulcanisation), soit à l'état cuit (avant réticulation ou après vulcanisation). Elle peut constituer tout ou partie d'un article semi-fini, en particulier destiné à être utilisé dans un bandage pneumatique ou non pneumatique qui comporte une bande de roulement, notamment dans la bande de roulement du bandage.

Les caractéristiques précitées de la présente invention, ainsi que d'autres, seront mieux comprises à la lecture de la description suivante de plusieurs exemples de réalisation de l'invention, donnés à titre illustratif et non limitatif.

## Exemples

Propriétés à la rupture :

Les essais de traction permettent de déterminer les propriétés à la rupture. Sauf indication différente, ils sont effectués conformément à la norme française NF T 46-002 de septembre 1988, avec une éprouvette de type H2, la vitesse de traction étant de 500 mm/min. Les contraintes à la rupture (en MPa) et les allongements à la rupture (en %) sont mesurés à 23°C ± 2°C selon la norme NF T 46-002, ainsi qu'à 100°C± 2°C.

Les résultats sont exprimés en base 100 par rapport à un témoin. Une valeur supérieure à celle du témoin, arbitrairement fixée à 100, indique un résultat amélioré, c'est-à-dire une grandeur mesurée supérieure à celle du témoin.

Microstructure des élastomères par analyse de résonance magnétique nucléaire (RMN) :

La microstructure des élastomères est déterminée par analyse RMN $^{1}H$, suppléée par l'analyse RMN $^{13}C$ lorsque la résolution des spectres RMN du $^{1}H$ ne permet pas l'attribution et la quantification de toutes les espèces. Les mesures sont réalisées à l'aide d'un spectromètre RMN BRUKER 500MHz à des fréquences de 500.43 MHz pour l'observation du proton et 125.83MHz pour l'observation du carbone.

Pour les élastomères non solubles mais ayant la capacité de gonfler dans un solvant, est utilisée une sonde HRMAS 4mm z-grad permettant d'observer le proton et le carbone en mode découplé du proton. Les spectres sont acquis à des vitesses de rotation de 4000Hz à 5000Hz.

Pour les mesures sur des élastomères solubles, est utilisée une sonde RMN liquide permettant d'observer le proton et le carbone en mode découplé du proton.

La préparation des échantillons non solubles est faite dans des rotors remplis avec le matériau analysé et un solvant deutéré permettant le gonflement, en général du chloroforme deutéré (CDCl3). Le solvant utilisé doit toujours être deutéré et sa nature chimique peut être adaptée par l'homme du métier. Les quantités de matériau utilisées sont ajustées de façon à obtenir des spectres avec une sensibilité et une résolution suffisante. Les échantillons solubles sont mis en solution dans un solvant deutéré (environ 25mg d'élastomère dans 1mL), en général du chloroforme deutéré (CDCl3). Le solvant ou coupage de solvant utilisé doit toujours être deutéré et sa nature chimique peut être adaptée par l'homme du métier.

Dans les deux cas (échantillon soluble ou échantillon gonflé) :

Pour la RMN du proton est utilisée une séquence simple impulsion de 30°. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Pour la RMN du carbone est utilisée une séquence simple impulsion 30° avec un découplage du proton uniquement pendant l'acquisition pour éviter les effets « Overhauser Nucléaire » (NOE) et rester quantitatif. La fenêtre spectrale est réglée pour observer l'ensemble des raies de résonances appartenant aux molécules analysées. Le nombre d'accumulation est réglé afin d'obtenir un rapport signal sur bruit suffisant pour la quantification de chaque motif. Le délai de recyclage entre chaque impulsion est adapté pour obtenir une mesure quantitative.

Les mesures de RMN sont réalisées à 25°C.

Température de transition vitreuse des polymères :

La température de transition vitreuse (Tg) est mesurée au moyen d'un calorimètre différentiel ("Differential Scanning Calorimeter") selon la norme ASTM D3418 (1999).

Viscosité Mooney :

La viscosité Mooney est mesurée à l'aide d'un consistomètre oscillant tel que décrit dans la norme ASTM D1646 (1999). La mesure se fait selon le principe suivant : l'échantillon analysé à l'état cru (i.e., avant cuisson) est moulé (mis en forme) dans une enceinte cylindrique chauffée à une température donnée (100°C). Après 1 minute de préchauffage, le rotor tourne au sein de l'éprouvette à 2 tours/minute et on mesure le couple utile pour entretenir ce mouvement après 4 minutes de rotation. La viscosité Mooney (ML) est exprimée en "unité Mooney" (UM, avec 1 UM=0.83 Newton.mètre).

Préparation des compositions de caoutchouc :

Trois compositions de caoutchouc C1 à C3 sont préparées. On procède pour la fabrication de ces compositions de la manière suivante :
On introduit dans un mélangeur interne (taux de remplissage final : environ 70% en volume), dont la température initiale de cuve est d'environ 80°C, l'élastomère, puis la silice, l'agent de couplage silane, ainsi que les divers autres ingrédients à l'exception du système de vulcanisation. On conduit alors un travail thermomécanique (phase non-productive) en une étape, qui dure environ 5 min à 6 minutes, jusqu'à atteindre une température maximale de « tombée » de 160°C. On récupère le mélange ainsi obtenu, on le refroidit puis on incorpore du soufre et un accélérateur type sulfénamide sur un mélangeur (homo-finisseur) à 23°C, en mélangeant le tout (phase productive) pendant un temps approprié (par exemple entre 5 et 12 min).

Les compositions de caoutchouc C1 à C3 contiennent toutes un élastomère diénique fortement saturé, l'élastomère E1, un système de vulcanisation, une silice et un agent de couplage silane. Elles se différencient les unes des autres par la nature chimique de l'agent de couplage silane.

Dans la composition de caoutchouc C1, l'agent de couplage silane est un silane polysulfure, le tétrasulfure de bis(3-triéthoxysilylpropyl), en abrégé TESPT, de formule $[(C_2H_5O)_3Si(CH_2)_3S_2]_2$ commercialisé sous la dénomination « Si69 » par la société Evonik. Dans la composition de caoutchouc C2, l'agent de couplage est le S-(octanoyl) mercaptopropyltriéthoxysilane, commercialisé sous le nom de « NXT » par la société Momentive.

Dans la composition de caoutchouc C3, l'agent de couplage silane est le « NXT-Z45 » commercialisé par la société Momentive.

Les compositions de caoutchouc C1 et C2 sont des compositions de caoutchouc non conformes à l'invention, puisque l'agent de couplage silane ne répond pas à la formule (1) du silane organofonctionnel. La composition de caoutchouc C3 est une composition de caoutchouc conforme à l'invention, puisque l'agent de couplage est un silane organofonctionnel qui répond à la formule (1).

Les formulations (en pce) des compositions de caoutchouc C1 à C3 sont décrites dans le tableau 1 (tableau 1).

Le taux total de soufre est identique pour chacune des compositions de caoutchouc, sachant que dans le cas de la composition de caoutchouc C1, l'agent de couplage « Si69 » relargue du soufre libre au cours de sa réaction avec l'élastomère, ce qui représente une source de soufre disponible pour la vulcanisation, soit 0.3 pce.

Trois autres compositions de caoutchouc C4 à C6 sont préparées selon le même mode opératoire que les compositions C1 à C3. Elles sont toutes conformes à l'invention, puisqu'elles contiennent toutes un élastomère diénique fortement saturé (E1), un système de vulcanisation, une silice et un agent de couplage silane organofonctionnel de formule (1), le « NXT-Z45 ». Les compositions C4 et C5 se différencient de la composition C3 par le taux de « NXT-Z45 ». La composition C6 se différencie de la composition C3 par le système de vulcanisation, puisque l'accélérateur de vulcanisation est un disulfure de thiurame au lieu d'être une sulfénamide. Les formulations (en pce) des compositions de caoutchouc C4 à C6 sont décrites dans le tableau 2 (tableau 2).

Les compositions ainsi obtenues sont ensuite calandrées, soit sous forme de plaques (d'une épaisseur allant de 2 à 3 mm) ou fines feuilles de caoutchouc, pour la mesure de leurs propriétés physiques ou mécaniques après vulcanisation à 150°C (état cuit), soit sous la forme de profilés directement utilisables, après découpage et/ou assemblage aux dimensions souhaitées, par exemple comme produits semi-finis pour pneumatiques.

L'élastomère E1 est un élastomère diénique fortement saturé, copolymère d'éthylène et de 1,3-butadiène préparé selon le mode opératoire suivant :
Dans un réacteur de 70 L contenant du méthylcyclohexane (64 L), de l'éthylène (5600 g) et du 1,3-butadiène (2948 g), on ajoute du butyloctylmagnésium (BOMAG) en solution dans le méthylcyclohexane et le système catalytique. Le ratio Mg/Nd est de 6.2. Le volume de la solution du système catalytique introduit est de 840 mL, la concentration de la solution du système catalytique en Nd étant 0.0065 M. La température de réaction est régulée à une température de 80°C et la réaction de polymérisation démarre. La réaction de polymérisation se déroule à une pression constante de 8.3 bars. Le réacteur est alimenté tout au long de la polymérisation en éthylène et en 1,3-butadiène dans les proportions molaires 73/27. La réaction de polymérisation est stoppée par refroidissement, dégazage du réacteur et ajout d'éthanol. Un anti-oxydant est ajouté à la solution de polymère. Le copolymère est récupéré après un stripping à la vapeur d'eau et séchage jusqu'à masse constante. La durée de polymérisation est de 225 minutes. La masse pesée (6.206 kg) permet de

déterminer l'activité catalytique moyenne du système catalytique exprimée en kilogramme de polymère synthétisé par mole de métal néodyme et par heure (kg/mol.h). Le copolymère possède une valeur de ML égale à 62.

Le système catalytique est un système catalytique préformé. Il est préparé dans le méthylcyclohexane à partir d'un métallocène, le $[Me_2Si(Flu)_2Nd(\mu\text{-}BH_4)_2Li(THF)]$ à 0.0065 mol/L, d'un co-catalyseur, le butyloctylmagnésium (BOMAG) dont le ratio molaire BOMAG/Nd est égal à 2.2, et d'un monomère de préformation, le 1,3-butadiène dont le ratio molaire 1,3-butadiène/Nd est égal à 90. Le milieu est chauffé à 80°C sur une durée de 5h. Il est préparé selon une méthode de préparation conforme au paragraphe II.1 de la demande de brevet WO 2017093654 A1.

Les résultats des propriétés à la rupture à l'état cuit des compositions de caoutchouc sont consignés dans le tableau 3 et dans le tableau 4.

Le tableau 3 montre que la composition de caoutchouc C3 est la composition de caoutchouc qui présente les meilleures propriétés à la rupture tant à 23°C qu'à 100°C. A la fois les allongements à la rupture et les contraintes à la rupture de la composition de caoutchouc C3 sont respectivement bien supérieurs aux allongements à la rupture et aux contraintes à la rupture des compositions C1 et C2, aussi bien à 23°C qu'à 100°C.

Le tableau 4 montre que l'amélioration des propriétés à la rupture est également obtenue pour des taux d'agent de couplage silane « NXT-Z45 » différents de ceux de la composition C3, ainsi que pour un système de vulcanisation différent.

Tableau 1

| Composition | C1 | C2 | C3 |
|---|---|---|---|
| E1 (1) | 100 | 100 | 100 |
| Silice (2) | 38 | 38 | 38 |
| Agent de couplage "Si69" (3) | 3.1 | | |
| Agent de couplage "NXT" (4) | | 4.2 | |
| Agent de couplage "NXT-Z45" (5) | | | 2.6 |
| DPG (6) | 1.2 | 1.2 | 1.2 |
| Cire Ozone (7) | 1 | 1 | 1 |
| Antioxydant 6PPD (8) | 2 | 2 | 2 |
| Acide stéarique (9) | 2 | 2 | 2 |
| ZnO (10) | 2.5 | 2.5 | 2.5 |
| Soufre | 1 | 1.3 | 1.3 |
| CBS (11) | 1 | 1 | 1 |

Tableau 2

| Composition | C4 | C5 | C6 |
|---|---|---|---|
| E1 (1) | 100 | 100 | 100 |
| Silice (2) | 38 | 38 | 38 |
| Agent de couplage "NXT-Z45" (5) | 3.1 | 4 | 2.6 |
| DPG (6) | 1.2 | 1.2 | 1.2 |
| Cire Ozone (7) | 1 | 1 | 1 |
| Antioxydant 6PPD (8) | 2 | 2 | 2 |
| Acide stéarique (9) | 2 | 2 | 2 |
| ZnO (10) | 2.5 | 2.5 | 2.5 |
| Soufre | 1.3 | 1.3 | 0.8 |
| CBS (11) | 1 | 1 | 0.5 |

(suite)

| Composition | C4 | C5 | C6 |
|---|---|---|---|
| TBZTD (12) | | | 0.15 |

(1) Copolymère d'éthylène et de 1,3-butadiène contenant 74% en mole de d'unité éthylène, 19% d'unité butadiène sous la forme de motifs 1,2 et 1,4 et 7% en mole de motif 1,2-cyclohexanediyle, de Tg -44°C
(2) "Zeosil 1165 MP" de Solvay-Rhodia sous forme de microperles
(3) Silane liquide triethoxysilylpropyltetrasulfure (TESPT) « Si69 » de la société Evonik
(4) Silane 3-octanoylthio-1-propyltriethoxysilane (« NXT ») - CAS 220727-26-4 - société Momentive
(5) Silane Mercapto - Thiocarboxylate Oligomer (« NXT-Z45 ») - CAS 922519-17-3 - société Momentive
(6) Diphénylguanidine « Perkacit DPG » de la société Flexsys
(7) Cire anti-ozone « VARAZON 4959 » de la société Sasol Wax
(8) N-(1,3-diméthylbutyl)-N'-phényl-p-phenylènediamine « Santoflex 6PPD » de la société Flexys
(9) Acide stéarique « Pristerene 4931 » de la société Uniqema
(10) Oxyde de Zinc de grade industriel de la société Umicore
(11) N-cyclohexyl-2-benzothiazol-sulfénamide « Santocure CBS » de la société Flexsys
(12) Disulfure de tétrabenzylthiurame ("Perkacit TBZTD" de la société Flexsys)- CAS 10591-85-2

Tableau 3

| Composition | C1 | C2 | C3 |
|---|---|---|---|
| Déformation rupture à 23°C | 100 | 104 | 126 |
| Contrainte rupture à 23°C | 100 | 100 | 144 |
| Déformation rupture à 100°C | 100 | 106 | 149 |
| Contrainte rupture à 100°C | 100 | 112 | 146 |

Tableau 4

| Composition | C3 | C4 | C5 | C6 |
|---|---|---|---|---|
| Déformation rupture à 23°C | 100 | 104 | 108 | 105 |
| Contrainte rupture à 23°C | 100 | 106 | 101 | 100 |
| Déformation rupture à 100°C | 100 | 121 | 136 | 109 |
| Contrainte rupture à 100°C | 100 | 111 | 111 | 98 |

## Revendications

**1.** Composition de caoutchouc qui comprend :

- un élastomère diénique fortement saturé qui est un copolymère d'éthylène et d'un 1,3-diène qui comprend des unités éthylène qui représentent plus de 50% en moles des unités monomères du copolymère,
- un système de vulcanisation,
- une charge renforçante qui contient une silice,
- et un agent de couplage silane organofonctionnel ayant au moins une fonction thiol bloquée, au moins une fonction thiol et au moins une fonction qui est un groupe hydroxyalcoxysilyle ou un groupe dialcoxysilyle cyclique et répondant à la formule (1)

$$(A)_p(B)_q \qquad (1)$$

dans laquelle A et B représentent respectivement un motif mercaptosilane bloqué répondant à la formule (2) et un motif mercaptosilane répondant à la formule (3)

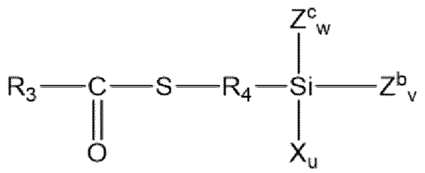

(2)

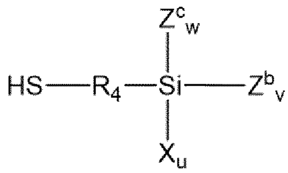

(3)

dans lesquelles
$R_3$ est choisi parmi un atome d'hydrogène, un alkyle en $C_1$-$C_{18}$, linéaire ou ramifié, un alcényle en $C_2$-$C_{18}$, linéaire ou ramifié,
chaque $R_4$ est indépendamment choisi parmi les groupes divalents hydrocarbonés saturés en $C_1$-$C_6$, linéaires ou ramifiés,
chaque $Z^b$ qui forme une structure de pontage entre un atome de silicium d'un motif et un atome de silicium d'un autre motif, ces motifs pouvant être identiques ou différents, est choisi indépendamment parmi $(-O-)_{0,5}$ et $[-O(R^0CR^0)_fO-]_{0,5}$ avec les symboles $R^0$, identiques ou différents, représentant chacun un atome d'hydrogène ou un alkyle en $C_1$-$C_3$ et f étant un nombre compris dans un domaine allant de 2 à 15,
chaque $Z^c$ qui forme une structure cyclique avec l'atome de silicium d'un motif est un groupe de formule $[-O(R^0CR^0)_fO-]_{0,5}$ avec $R^0$ et f tels que définis précédemment, chaque X est choisi indépendamment parmi un atome d'hydrogène, un groupe hydroxyle, un groupe alkyle en $C_1$-$C_6$, un groupe alcoxyle en $C_1$-$C_6$ et un groupe de formule $HO(R^0CR^0)_fO-$ avec $R^0$ et f tels que définis précédemment,
avec u+v+2w=3, u étant un nombre égal à 0, 1, 2 ou 3, v étant un nombre égal à 1, 2 ou 3 et w étant un nombre égal à 0 ou 1,
p est un nombre compris dans un domaine allant de 1 à 20,
q est un nombre compris dans un domaine allant de 1 à 20.

**2.** Composition de caoutchouc selon la revendication 1 dans laquelle le 1,3-diène est le 1,3-butadiène ou un mélange de 1,3-diènes dont un est le 1,3-butadiène, de préférence le 1,3-butadiène.

**3.** Composition de caoutchouc selon l'une quelconque des revendications 1 à 2 dans laquelle les unités éthylène dans l'élastomère diénique fortement saturé représentent au moins 60% en mole de l'ensemble des unités monomères de l'élastomère diénique fortement saturé, préférentiellement au moins 65% en mole de l'ensemble des unités monomères de l'élastomère diénique fortement saturé, plus préférentiellement au moins 70% en mole de l'ensemble des unités monomères de l'élastomère diénique fortement saturé.

**4.** Composition de caoutchouc selon l'une quelconque des revendications 1 à 3 dans laquelle les unités éthylène dans l'élastomère diénique fortement saturé représentent au plus 90% en mole de l'ensemble des unités monomères de l'élastomère diénique fortement saturé, préférentiellement au plus 85% en mole de l'ensemble des unités monomères de l'élastomère diénique fortement saturé.

**5.** Composition de caoutchouc selon l'une quelconque des revendications 1 à 4 dans laquelle les unités éthylène dans l'élastomère diénique fortement saturé représentent au plus 80% en mole de l'ensemble des unités monomères de l'élastomère diénique fortement saturé.

**6.** Composition de caoutchouc selon l'une quelconque des revendications 1 à 5 dans laquelle l'élastomère diénique fortement saturé est un copolymère statistique.

**7.** Composition de caoutchouc selon l'une quelconque des revendications 1 à 6 dans laquelle la silice représente plus de 50% en masse de la charge renforçante, préférentiellement plus de 85% en masse de la charge renforçante.

**8.** Composition de caoutchouc selon l'une quelconque des revendications 1 à 7 dans laquelle $R_3$ dans la formule (2) est choisi parmi l'atome d'hydrogène, les alkyles en $C_1$-$C_{10}$ et les alcényles en $C_2$-$C_{10}$, préférentiellement est un alkyle en $C_6$-$C_8$ linéaire, plus préférentiellement est heptyle.

**9.** Composition de caoutchouc selon l'une quelconque des revendications 1 à 8 dans laquelle chaque $R_4$ dans les formules (2) et (3) est indépendamment un alkylène en $C_1$-$C_4$ linéaire, préférentiellement propylène.

**10.** Composition de caoutchouc selon l'une quelconque des revendications 1 à 9 dans laquelle chaque $Z^b$ dans les formules (2) et (3) est choisi indépendamment dans le groupe constitué par les motifs de formule $(-O-)_{0,5}$, $[-OCH_2CH_2CH_2O-]_{0,5}$, $[-OCH_2CH_2CH_2CH_2O-]_{0,5}$ et $[-OCH_2CH(CH_3)CH_2O-]_{0,5}$, préférentiellement est de formule $(-O-)_{0,5}$ ou $[-OCH_2CH(CH_3)CH_2O-]_{0,5}$.

**11.** Composition de caoutchouc selon l'une quelconque des revendications 1 à 10 dans laquelle chaque $Z^c$ dans les formules (2) et (3) est choisi indépendamment dans le groupe constitué par les motifs de formule $[-OCH_2CH_2CH_2O-]_{0,5}$, $[-OCH_2CH_2CH_2CH_2O-]_{0,5}$ et $[-OCH_2CH(CH_3)CH_2O-]_{0,5}$, préférentiellement est de formule $[-OCH_2CH(CH_3)CH_2O-]_{0,5}$.

**12.** Composition de caoutchouc selon l'une quelconque des revendications 1 à 11 dans laquelle chaque X dans les formules (2) et (3) est choisi indépendamment dans le groupe constitué par hydroxyle, méthoxy, éthoxy, méthyle, éthyle, 3-hydroxypropoxy, 3-hydroxy-2-méthylpropoxy et 4-hydroxybut-1-oxy, préférentiellement chaque X dans les formules (2) et (3) est identique et est choisi dans le groupe constitué par hydroxyle, méthoxy, éthoxy et 3-hydroxy-2-méthylpropoxy.

**13.** Composition de caoutchouc selon l'une quelconque des revendications 1 à 12 dans laquelle le silane organofonctionnel présente un pourcentage molaire des motifs mercaptosilanes bloqués (A) allant de 20 à 80 % et un pourcentage molaire des motifs mercaptosilanes (B) allant de 80 à 20%, préférentiellement le silane organofonctionnel présente un pourcentage molaire des motifs mercaptosilanes bloqués (A) allant de de 40 à 60 % et un pourcentage molaire des motifs mercaptosilanes (B) allant de 60 à 40%, plus préférentiellement le silane organofonctionnel présente un pourcentage molaire des motifs mercaptosilanes bloqués allant de 50 à 55 % et un pourcentage molaire des motifs mercaptosilanes allant de 50 à 45%.

**14.** Pneumatique qui comprend une composition de caoutchouc définie à l'une quelconque des revendications 1 à 13, préférentiellement dans sa bande de roulement.

**Patentansprüche**

**1.** Kautschukzusammensetzung, die Folgendes umfasst:

- ein hochgesättigtes Dienelastomer, bei dem es sich um ein Copolymer von Ethylen und einem 1,3-Dien handelt, das Ethyleneinheiten umfasst, die mehr als 50 Mol-% der Monomereinheiten des Copolymers ausmachen,
- ein Vulkanisationssystem,
- einen verstärkenden Füllstoff, der eine Kieselsäure enthält,
- und ein organofunktionelles Silan-Kupplungsmittel mit mindestens einer blockierten Thiolfunktion, mindestens einer Thiolfunktion und mindestens einer Funktion, bei der es sich um eine Hydroxyalkoxysilylgruppe oder eine cyclische Dialkoxysilylgruppe handelt, und mit der Formel (1)

$$(A)_p(B)_q \qquad (1),$$

wobei A und B für eine blockierte Mercaptosilaneinheit, die der Formel (2) entspricht, bzw. eine Mercaptosilaneinheit, die der Formel (3) entspricht, stehen:

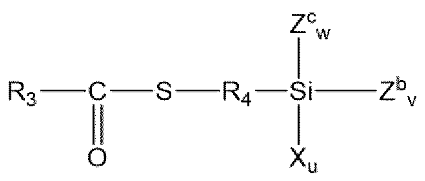

(2)

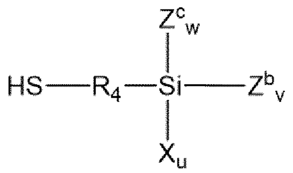
(3)

wobei
$R_3$ aus einem Wasserstoffatom, einem linearen oder verzweigten $C_1$-$C_{18}$-Alkyl, einem linearen oder verzweigten $C_2$-$C_{18}$-Alkenyl ausgewählt ist,
$R_4$ jeweils unabhängig aus linearen oder verzweigten, gesättigten zweiwertigen $C_1$-$C_6$-Kohlenwasserstoffgruppen ausgewählt sind,
$Z^b$, das eine Brückenstruktur zwischen einem Siliciumatom einer Einheit und einem Siliciumatom einer anderen Einheit bildet, wobei diese Einheiten gleich oder verschieden sein können, jeweils unabhängig aus $(-O-)_{0,5}$ und $[-O(R^0CR^0)_fO-]_{0,5}$ ausgewählt ist, wobei die Symbole $R^0$, die gleich oder verschieden sein können, jeweils für ein Wasserstoffatom oder ein $C_1$-$C_3$-Alkyl stehen und f eine Zahl in einem Bereich von 2 bis 15 ist,
$Z^c$, das mit dem Siliciumatom einer Einheit eine cyclische Struktur bildet, jeweils eine Gruppe der Formel $[-O(R^0CR^0)_fO-]_{0,5}$ ist, wobei $R^0$ und f wie oben definiert sind, X jeweils unabhängig aus einem Wasserstoffatom, einer Hydroxylgruppe, einer $C_1$-$C_6$-Alkylgruppe, einer $C_1$-$C_6$-Alkoxygruppe und einer Gruppe der Formel $HO(R^0CR^0)_fO$-ausgewählt ist, wobei $R^0$ und f wie oben definiert sind, wobei u+v+2w=3, wobei u eine Zahl gleich 0, 1, 2 oder 3 ist, wobei v eine Zahl gleich 1, 2 oder 3 ist und w eine Zahl gleich 0 oder 1 ist,
p eine Zahl in einem Bereich von 1 bis 20 ist;
q eine Zahl in einem Bereich von 1 bis 20 ist.

2. Kautschukzusammensetzung nach Anspruch 1, wobei es sich bei dem 1,3-Dien um 1,3-Butadien oder eine Mischung von 1,3-Dienen, von denen eines 1,3-Butadien ist, vorzugsweise 1,3-Butadien, handelt.

3. Kautschukzusammensetzung nach einem der Ansprüche 1 bis 2, wobei die Ethyleneinheiten in dem hochgesättigten Dienelastomer mindestens 60 Mol-% aller der Monomereinheiten des hochgesättigten Dienelastomers, bevorzugt mindestens 65 Mol-% aller der Monomereinheiten des hochgesättigten Dienelastomers, weiter bevorzugt mindestens 70 Mol-% aller der Monomereinheiten des hochgesättigten Dienelastomers, ausmachen.

4. Kautschukzusammensetzung nach einem der Ansprüche 1 bis 3, wobei die Ethyleneinheiten in dem hochgesättigten Dienelastomer höchstens 90 Mol-% aller der Monomereinheiten des hochgesättigten Dienelastomers, bevorzugt höchstens 85 Mol-% aller der Monomereinheiten des hochgesättigten Dienelastomers, ausmachen.

5. Kautschukzusammensetzung nach einem der Ansprüche 1 bis 4, wobei die Ethyleneinheiten in dem hochgesättigten Dienelastomer höchstens 80 Mol-% aller der Monomereinheiten des hochgesättigten Dienelastomers ausmachen.

6. Kautschukzusammensetzung nach einem der Ansprüche 1 bis 5, wobei es sich bei dem hochgesättigten Dienelastomer um ein statistisches Copolymer handelt.

7. Kautschukzusammensetzung nach einem der Ansprüche 1 bis 6, wobei die Kieselsäure mehr als 50 Massen-% des verstärkenden Füllstoffs, bevorzugt mehr als 85 Massen-% des verstärkenden Füllstoffs, ausmacht.

8. Kautschukzusammensetzung nach einem der Ansprüche 1 bis 7, wobei $R_3$ in der Formel (2) aus einem Wasserstoffatom, $C_1$-$C_{10}$-Alkylgruppen und $C_2$-$C_{10}$-Alkenylgruppen ausgewählt ist und bevorzugt ein lineares $C_6$-$C_8$-Alkyl und weiter bevorzugt Heptyl ist.

9. Kautschukzusammensetzung nach einem der Ansprüche 1 bis 8, wobei $R_4$ in den Formeln (2) und (3) jeweils unabhängig ein lineares $C_1$-$C_4$-Alkylen, bevorzugt Propylen, ist.

10. Kautschukzusammensetzung nach einem der Ansprüche 1 bis 9, wobei $Z^b$ in den Formeln (2) und (3) jeweils unabhängig aus der Gruppe bestehend aus Einheiten der Formel $(-O-)_{0,5}$, $[-OCH_2CH_2CH_2O-]_{0,5}$, $[-OCH_2CH_2CH_2CH_2O-]_{0,5}$ und $[-OCH_2CH(CH_3)CH_2O-]_{0,5}$ ausgewählt ist und bevorzugt die Formel $(-O-)_{0,5}$ oder $[-OCH_2CH(CH_3)CH_2O-]_{0,5}$ aufweist.

**11.** Kautschukzusammensetzung nach einem der Ansprüche 1 bis 10, wobei $z^c$ in den Formeln (2) und (3) jeweils unabhängig aus der Gruppe bestehend aus Einheiten der Formel $[-OCH_2CH_2CH_2O-]_{0,5}$, $[-OCH_2CH_2CH_2CH_2O-]_{0,5}$ und $[-OCH_2CH(CH_3)CH_2O-]_{0,5}$ ausgewählt ist und bevorzugt die Formel $[-OCH_2CH(CH_3)CH_2O-]_{0,5}$ aufweist.

**12.** Kautschukzusammensetzung nach einem der Ansprüche 1 bis 11, wobei X in den Formeln (2) und (3) jeweils unabhängig aus der Gruppe bestehend aus Hydroxyl, Methoxy, Ethoxy, Methyl, Ethyl, 3-Hydroxypropoxy, 3-Hydroxy-2-methylpropoxy und 4-Hydroxybut-1-oxy ausgewählt ist und bevorzugt X in den Formeln (2) und (3) jeweils gleich ist und aus der Gruppe bestehend aus Hydroxyl, Methoxy, Ethoxy und 3-Hydroxy-2-methylpropoxy ausgewählt ist.

**13.** Kautschukzusammensetzung nach einem der Ansprüche 1 bis 12, wobei das organofunktionelle Silan einen Molprozentanteil an blockierten Mercaptosilaneinheiten (A) im Bereich von 20 bis 80 % und einen Molprozentanteil an Mercaptosilaneinheiten (B) im Bereich von 80 bis 20 % aufweist, bevorzugt das organofunktionelle Silan einen Molprozentanteil an blockierten Mercaptosilaneinheiten (A) im Bereich von 40 bis 60 % und einen Molprozentanteil an Mercaptosilaneinheiten (B) im Bereich von 60 bis 40 % aufweist, weiter bevorzugt das organofunktionelle Silan einen Molprozentanteil an blockierten Mercaptosilaneinheiten im Bereich von 50 bis 55 % und einen Molprozentanteil an Mercaptosilaneinheiten im Bereich von 50 bis 45 % aufweist

**14.** Reifen, der eine Kautschukzusammensetzung gemäß einem der Ansprüche 1 bis 13 umfasst, bevorzugt in seiner Lauffläche.

## Claims

**1.** Rubber composition which comprises:

- a highly saturated diene elastomer which is a copolymer of ethylene and of a 1,3-diene comprising ethylene units which represent more than 50 mol% of the monomer units of the copolymer,
- a vulcanization system,
- a reinforcing filler containing a silica,
- and an organofunctional silane coupling agent containing at least one blocked thiol function, at least one thiol function and at least one function which is a hydroxyalkoxysilyl group or a cyclic dialkoxysilyl group and corresponding to formula (1)

$$(A)_p(B)_q \qquad (1)$$

in which A and B respectively represent a blocked mercaptosilane unit corresponding to formula (2) and a mercaptosilane unit corresponding to formula (3)

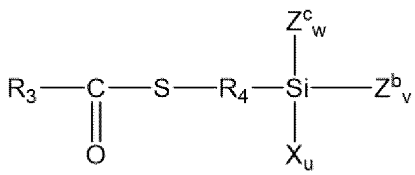

(2)

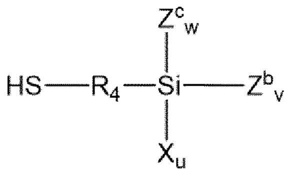

(3)

in which:

$R_3$ is chosen from a hydrogen atom, a linear or branched $C_1$-$C_{18}$ alkyl, a linear or branched $C_2$-$C_{18}$ alkenyl,
each $R_4$ is independently chosen from linear or branched, saturated $C_1$-$C_6$ divalent hydrocarbon-based

groups,
each $Z^b$ which forms a bridging structure between a silicon atom of one unit and a silicon atom of another unit, which units may be identical or different, is independently chosen from $(-O-)_{0.5}$ and $[-O(R^0CR^0)_fO-]_{0.5}$ with the symbols $R^0$, which may be identical or different, each representing a hydrogen atom or a $C_1$-$C_3$ alkyl and f being a number ranging from 2 to 15,
each $Z^c$ which forms a cyclic structure with the silicon atom of a unit is a group of formula $[-O(R^0CR^0)_fO-]_{0.5}$ with $R^0$ and f as defined previously,
each X is chosen independently from a hydrogen atom, a hydroxyl group, a $C_1$-$C_6$ alkyl group, a $C_1$-$C_6$ alkoxy group and a group of formula $HO(R^0CR^0)_fO-$ with $R^0$ and f as defined previously,
with u+v+2w = 3, u being a number equal to 0, 1, 2 or 3, v being a number equal to 1, 2 or 3 and w being a number equal to 0 or 1,
p is a number within a range extending from 1 to 20,
q is a number within a range extending from 1 to 20.

**2.** The rubber composition as claimed in claim 1, in which the 1,3-diene is 1,3-butadiene, isoprene or a mixture of 1,3-dienes, one of which is 1,3-butadiene, preferably 1,3-butadiene.

**3.** The rubber composition as claimed in either of claims 1 and 2, in which the ethylene units in the highly saturated diene elastomer represent at least 60 mol% of the total monomer units of the highly saturated diene elastomer, preferentially at least 65 mol% of the total monomer units of the highly saturated diene elastomer, more preferentially at least 70 mol% of the total monomer units of the highly saturated diene elastomer.

**4.** The rubber composition as claimed in any one of claims 1 to 3, in which the ethylene units in the highly saturated diene elastomer represent not more than 90 mol% of the total monomer units of the highly saturated diene elastomer, preferentially not more than 85 mol% of the total monomer units of the highly saturated diene elastomer.

**5.** The rubber composition as claimed in any one of claims 1 to 4, in which the ethylene units in the highly saturated diene elastomer represent not more than 80 mol% of all of the monomer units of the highly saturated diene elastomer.

**6.** The rubber composition as claimed in any one of claims 1 to 5, in which the highly saturated diene elastomer is a statistical copolymer.

**7.** The rubber composition as claimed in any one of claims 1 to 6, in which silica represents more than 50% by mass of the reinforcing filler, preferentially more than 85% by mass of the reinforcing filler.

**8.** The rubber composition as claimed in any one of claims 1 to 7, in which $R_3$ in formula (2) is chosen from a hydrogen atom, $C_1$-$C_{10}$ alkyl and $C_2$-$C_{10}$ alkenyl, and is preferentially a linear $C_6$-$C_8$ alkyl, more preferentially heptyl.

**9.** The rubber composition as claimed in any one of claims 1 to 8, in which each $R_4$ in formulae (2) and (3) is independently a linear $C_1$-$C_4$ alkylene, preferentially propylene.

**10.** The rubber composition as claimed in any one of claims 1 to 9, in which each $Z^b$ in formulae (2) and (3) is independently chosen from the group consisting of units of formulae $(-O-)_{0.5}$, $[-OCH_2CH_2CH_2O-]_{0.5}$, $[-OCH_2CH_2CH_2CH_2O-]_{0.5}$ and $[-OCH_2CH(CH_3)CH_2O-]_{0.5}$, and is preferentially of formula $(-O-)_{0.5}$ or $[-OCH_2CH(CH_3)CH_2O-]_{0.5}$.

**11.** The rubber composition as claimed in any one of claims 1 to 10, in which each $Z^c$ in formulae (2) and (3) is independently chosen from the group consisting of units of formulae $[-OCH_2CH_2CH_2O-]_{0.5}$, $[-OCH_2CH_2CH_2CH_2O-]_{0.5}$ and $[-OCH_2CH(CH_3)CH_2O-]_{0.5}$, and is preferentially of formula $[-OCH_2CH(CH_3)CH_2O-]_{0.5}$.

**12.** The rubber composition as claimed in any one of claims 1 to 11, in which each X in formulae (2) and (3) is independently chosen from the group consisting of hydroxyl, methoxy, ethoxy, methyl, ethyl, 3-hydroxypropoxy, 3-hydroxy-2-methylpropoxy and 4-hydroxybut-1-oxy; preferentially, each X in formulae (2) and (3) is identical and is chosen from the group consisting of hydroxyl, methoxy, ethoxy and 3-hydroxy-2-methylpropoxy.

**13.** The rubber composition as claimed in any one of claims 1 to 12, in which the organofunctional silane has a molar percentage of blocked mercaptosilane units (A) ranging from 20% to 80% and a molar percentage of mercaptosilane units (B) ranging from 80% to 20%, preferentially the organofunctional silane has a molar percentage of blocked

mercaptosilane units (A) ranging from 40% to 60% and a molar percentage of mercaptosilane units (B) ranging from 60% to 40%, more preferentially the organofunctional silane has a molar percentage of blocked mercaptosilane units ranging from 50% to 55% and a molar percentage of mercaptosilane units ranging from 50% to 45%.

**14.** A tire which comprises a rubber composition defined in any one of claims 1 to 13, preferentially in its tread.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- WO 2014114607 A1
- WO 2018224776 A1
- WO 03018332 A
- FR 2898077
- EP 1092731 A
- WO 2004035639 A
- WO 2007054223 A
- WO 2007054224 A
- WO 2017093654 A1
- WO 2018020122 A1
- WO 2018020123 A1
- WO 2017103543 A1
- WO 201713544 A1
- WO 2018193193 A
- WO 2018193194 A
- WO 2017097831 A1
- WO 03016215 A1
- WO 03016387 A1
- WO 2007098120 A2


### Littérature non-brevet citée dans la description


- *The Journal of the American Chemical Society*, February 1938, vol. 60, 309
- *CHEMICAL ABSTRACTS*, 220727-26-4
- *CHEMICAL ABSTRACTS*, 922519-17-3
- *CHEMICAL ABSTRACTS*, 10591-85-2